# EUROPÄISCHE PATENTANMELDUNG

(11) **EP 2 255 662 A2**
(43) Veröffentlichungstag der Anmeldung: **01.12.2010**
(21) Anmeldenummer: 10162835.2
(22) Anmeldetag: 14.05.2010
(51) Int. Cl.: A21C 13/02

(54) **Teigbearbeitungsanlage**

(30) Priorität: 30.05.2009 DE 102009023486
(71) Anmelder: Werner & Pfleiderer Lebensmitteltechnik GmbH, 91550 Dinkelsbühl (DE)
(72) Erfinder: Fiedler, Rudolf, 91731, Langfurth (DE)
(74) Vertreter: Hofmann, Matthias

(57) **Zusammenfassung**

Eine Teigbearbeitungsanlage (1) hat eine Teigportioniereinrichtung (6), eine dieser nachgeordnete Transportvorrichtung (9) für Teiglinge (8) und eine Gärvorrichtung (18) mit einem Gärraum (17), durch den die Teiglinge (8) längs eines Gärweges mit der Transportvorrichtung (9) transportiert werden. Zwischen der Teigportioniereinrichtung (6) und einer Teigveredelungseinrichtung (24) liegt eine Vorgär-Transportstrecke. Zwischen der Teigveredelungseinrichtung (24) und einer Ausgabe-Transporteinrichtung (33, 34) liegt eine Nachgär-Transportstrecke. Die Vorgär- und die Nachgär-Transportstrecke fallen zumindest abschnittsweise zusammen, verlaufen also längs einer gemeinsamen Gär-Transportstrecke und nutzen die gleichen Komponenten der Transportvorrichtung (9). Es resultiert eine Teigbearbeitungsanlage, bei der ein Nachgären nach einem Veredelungsschritt für die Teiglinge bei möglichst kompaktem Aufbau ermöglicht ist.

## Beschreibung

Die Erfindung betrifft eine Teigbearbeitungsanlage mit einer Teigportioniereinrichtung, einer Transportvorrichtung für Teiglinge, einer Gärvorrichtung und einer Teigveredelungseinrichtung.

Derartige Teigbearbeitungsanlagen sind beispielsweise aus der DE 77 09 505 U1, der DE 44 29 973 A1 oder der DE 23 46 577 A1 bekannt.

Es ist eine Aufgabe der vorliegenden Erfindung, bei einer derartigen Teigbearbeitungsanlage ein Nachgären nach einem Veredelungsschritt für die Teiglinge bei möglichst kompaktem Aufbau zu ermöglichen.

Diese Aufgabe ist erfindungsgemäß gelöst durch eine Teigbearbeitungsanlage mit den im Anspruch 1 angegebenen Merkmalen.

Erfindungsgemäß wurde erkannt, dass, eine entsprechende Führung des Transportweges für die Teiglinge vorausgesetzt, eine doppelte Nutzung einer Gär-Transportstrecke einerseits als Vorgär- und andererseits als Nachgär-Transportstrecke möglich ist. Wird ein Nachgären der Teiglinge nach dem Veredeln gewünscht, kann dann die Gär-Transportstrecke zum Nachgären ein zweites Mal durchlaufen werden. Es resultiert eine kompakte Teigbearbeitungsanlage. Ein separater Nachgärschrank kann entfallen.

Eine Transportvorrichtung nach Anspruch 2 hat sich in der Praxis bewährt. In jedem der Gehänge kann eine Mehrzahl von Teiglingen nebeneinander untergebracht sein. Eine Transport-Bewegungsrichtung der Transportvorrichtung kann immer in der gleichen Richtung verlaufen. Dies vereinfacht den Antrieb für eine solche Transportvorrichtung.

Eine Veredelungsfolge-Transport-Weicheneinrichtung nach Anspruch 3 ermöglicht ein Umschalten zwischen einem reinen Vorgärbetrieb, bei dem die Teiglinge nach dem Veredeln aus der Teigbearbeitungsanlage ausgeführt werden, und einem Nachgärbetrieb, bei dem nach dem Veredeln die Nachgär-Transportstrecke durchlaufen wird. Der Vorgärbetrieb kann insbesondere als kontinuierlicher Betrieb ausgestaltet sein. Dies führt im Vorgärbetrieb zu einem hohen Durchsatz der Teigbearbeitungsanlage.

Eine Gärfolge-Transport-Weicheneinrichtung nach Anspruch 4 ermöglicht ein Umschalten zwischen einem Veredelungsbetrieb und einem Abführbetrieb, bei dem die Teiglinge nach dem Durchlaufen der Gär-Transportstrecke abgeführt werden.

Ein verlagerbarer Übergabeförderer nach Anspruch 5 stellt eine konstruktiv einfach herzustellende Transport-Weicheneinrichtung dar. Der Übergabeförderer ist in mindestens zwei Stellungen verlagerbar, die den Weichenstellungen der Transport-Weicheneinrichtung entsprechen.

Eine Gehänge-Wendeeinrichtung nach Anspruch 6 ermöglicht einen Wechsel zwischen einem Betrieb, in dem die Teiglinge durch Wenden der Gehänge aus den Gehängen hin zu einer weiteren Transportkomponente übergeben werden, und einem Betrieb, bei dem die Teiglinge in den Gehängen verbleiben. Auf diese Weise lässt sich die Weichenfunktion mit konstruktiv geringem Aufwand realisieren.

Eine Integration der Gehänge-Wendeeinrichtung nach Anspruch 7 führt zu einer baulichen Vereinfachung der Teigbearbeitungsanlage.

Ein weiterer stationärer Übergabeförderer nach Anspruch 8 ermöglicht es, in den verschiedenen Stellungen der Gärfolge-Transport-Weicheneinrichtung verschiedene Übergabelängen zu realisieren. Dies vergrößert die Freiheitsgrade bei der Konstruktion der Teigbearbeitungsanlage.

Eine Unterbringung von Hauptkomponenten der Teigbearbeitungsanlage in einem gemeinsamen Gehäuse nach Anspruch 9 führt zu einem insgesamt kompakten Aufbau der Anlage.

Eine Verstelleinrichtung nach Anspruch 10 ermöglicht einen automatisierten Betrieb der Teigbearbeitungsanlage. Alternativ ist es möglich, die Weicheneinrichtungen manuell umzustellen.

Ein Ausführungsbeispiel der Erfindung wird nachfolgend anhand der Zeichnung näher erläutert. In dieser zeigen:
- Fig. 1: schematisch eine Teigbearbeitungsanlage in einer Seitenansicht, wobei externe Details der Teigbearbeitungsanlage teilweise im Querschnitt dargestellt sind und eine Veredelungsfolge- Transport-Weicheneinrichtung einer Transportvorrichtung der Teigbearbeitungsanlage in einer Abführstellung und eine Gärfol- ge-Transport-Weicheneinrichtung der Transportvorrichtung in ei- ner Veredelungsstellung dargestellt sind;
- Fig. 2: eine Ausschnittsvergrößerung aus Fig. 1 im Bereich der beiden Weicheneinrichtungen;
- Fig. 3: eine im Vergleich zu der Fig. 4 nochmals vergrößerte Aus- schnittsvergrößerung aus Fig. 1 im Bereich der Veredelungsfol- ge-Weicheneinrichtung;
- Fig. 4: in einer zu Fig. 1 ähnlichen Darstellung die Teigbearbeitungsan- lage mit der Veredelungsfolge-Transport-Weicheneinrichtung in einer Nachgärstellung und der Gärfolge-Transport- Weicheneinrichtung in der Veredelungsstellung; und
- Fig. 5: in einer zu Fig. 1 ähnlichen Darstellung die Teigbearbeitungsan- lage mit der Veredelungsfolge-Transport-Weicheneinrichtung in der Nachgärstellung und der Gärfolge-Transport- Weicheneinrichtung in einer Abführstellung.

Eine Teigbearbeitungsanlage 1 hat ein insgesamt quaderförmiges Gesamtgehäuse 2, welches sich über Standfüße 3 am Boden 4 abstützt. Teig kann der Teigbearbeitungsanlage 1 über einen Aufgabetrichter 5 zugeführt werden. Dieser ist im Transportweg für den Teig durch die Teigbearbeitungsanlage 1 stromaufwärts und über einer Teigteil- und -portioniereinrichtung 6 angeordnet. In letzterer wird der Teig zunächst portioniert geteilt. Die hierdurch entstehenden Teiglinge werden in einer Teigwirkeinrichtung 7, die in der Teigteil- und -portioniereinrichtung 6 untergebracht ist, zu Teiglingen 8 rundgewirkt. Der Teigteil- und -portioniereinrichtung 6 ist eine Transportvorrichtung 9 nachgeordnet, die die Teiglinge 8 auf ihrem Bearbeitungsweg durch die Teigbearbeitungsanlage 1 transportiert.

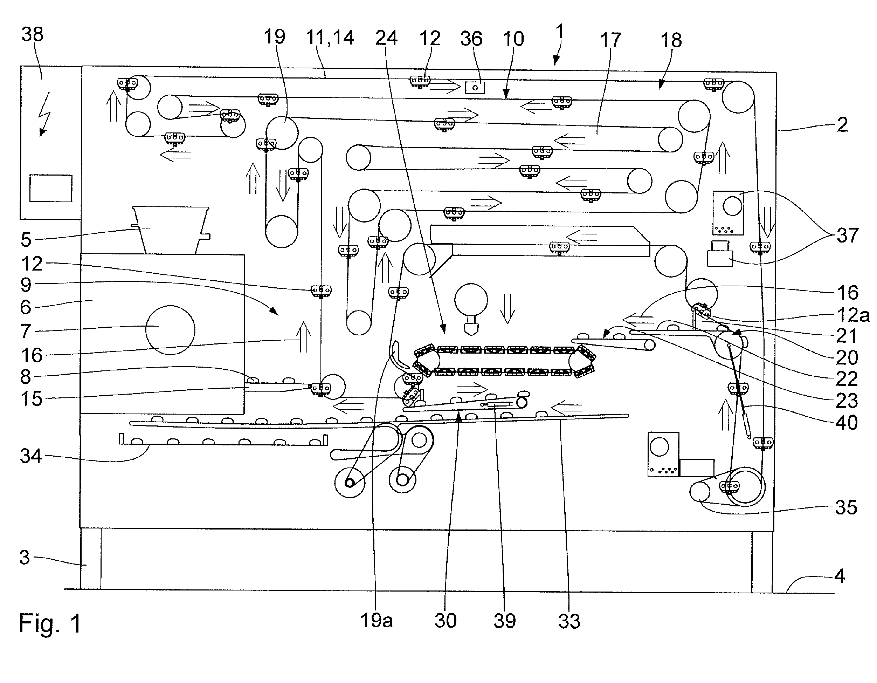

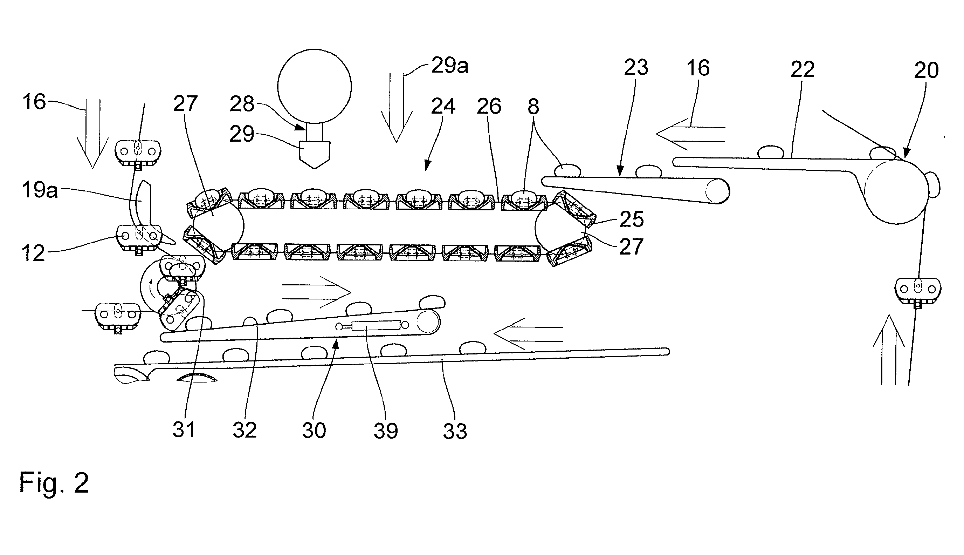

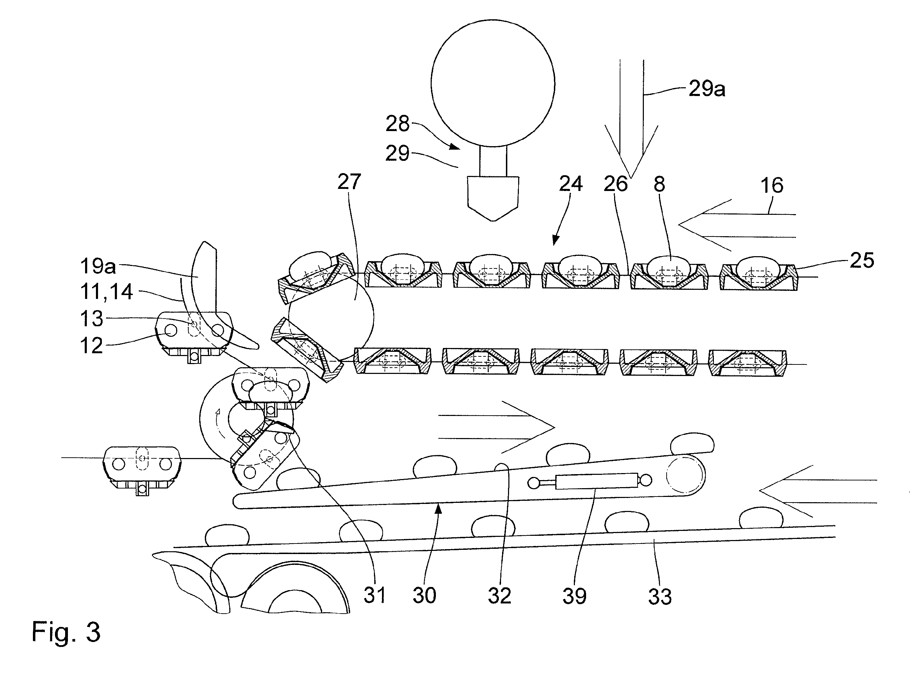

Teil der Transportvorrichtung 9 ist eine Gehänge-Transporteinrichtung 10 mit einer Mehrzahl von längs eines Endlos-Weges 11 transportierten Gehängen 12 für die Teiglinge 8 aufweist. Die Gehänge 12 dienen der Aufnahme einer Mehrzahl von senkrecht zur Zeichenebene der Fig. 1 bis 5 nebeneinander liegenden Teiglingen 8. Die Gehänge 12 sind jeweils um eine Gehängeachse 13 (vgl. Fig. 3) schwenkbar an einem Fördertrum einer längs des Endlos-Weges 11 verlaufenden Förderkette 14 aufgehängt. Die horizontal verlaufenden Gehängeachsen 13 sind in Bezug auf die jeweiligen Gehänge 12 so angeordnet, dass auch bei mit den Teiglingen 8 befüllten Gehängen 12 deren Schwerpunkt unterhalb der Gehängeachse 13 liegt.

Zwischen der Teigteil- und -portioniereinrichtung 6 und der Gehänge-Transporteinrichtung 10 ist im Transportweg der Transportvorrichtung 9 ein Endlos-Zuführband 15 zur Übergabe der Teiglinge 8 von der Teigteil-und -portioniereinrichtung 6 in die vorbeilaufenden Gehänge 12 angeordnet. Der Verlauf des Endlos-Weges 11 ist in den Fig. 1 bis 5 durch Richtungspfeile 16 angedeutet. Ein Großteil des Endlos-Weges 11 liegt im Gärraum 17 einer Gärvorrichtung 18 der Teigbearbeitungsanlage 1. Ein Teil des Endlos-Weges 11 stellt also einen Gärweg durch den Gärraum 17 dar.

Längs des Endlos-Weges 11 wird die Förderkette 14 durch eine Mehrzahl von Umlenkrollen bzw. -rädern 19 und auch von Umlenkblechen 19a umgelenkt. Zur Transportvorrichtung 9 gehört nach dem Gärweg durch den Gärraum 17 eine Gärfolge-Transport-Weicheneinrichtung 20. Die Gärfolge-Transport-Weicheneinrichtung 20 ist in der Fig. 1 in einer Veredelungsstellung dargestellt. In dieser Stellung ist eine in der Fig. 1 lediglich schematisch dargestellte Gehänge-Wendeeinrichtung in Form eines Wende-Mitnehmers 21 aktiv. In dieser aktiven Stellung bewirkt der Wende-Mitnehmer 21 ein Wenden des an ihm vorbeilaufenden Gehänges 12a, so dass die Teiglinge, die im Gehänge 12a transportiert wurden, auf ein Förderband 22 der Gärfolge-Transport-Weicheneinrichtung 20 übergeben werden. Diese Übergabe erfolgt, ohne dass die Teiglinge aus dem jeweiligen Gehänge 12a auf das Förderband 22 frei fallen. Die Gehänge-Wendeeinrichtung 21 ist ein integraler Bestandteil der Gärfolge-Transport-Weicheneinrichtung 20.

Der Weg der Gehänge 12 zwischen dem Zuführband 15 und der Gärfolge-Transport-Weicheneinrichtung 20 stellt eine Gär-Transportstrecke durch den Gärraum 17 dar.

In der Veredelungsstellung bewerkstelligt die Gärfolge-Transport-Weicheneinrichtung 20 eine direkte Übergabe der Teiglinge 8 zwischen der Gär-Transportstrecke durch den Gärraum 17 und der Teigveredelungseinrichtung 24.

Einem Förderband 22, das einen Übergabeförderer darstellt, in der Förderrichtung 16 für die Teiglinge 8 nachgeordnet ist ein weiterer stationärer Übergabeförderer 23, der ebenfalls als Endlos-Förderband ausgebildet ist.

Dem Übergabeförderer 23 nachgeordnet ist eine Teigveredelungseinrichtung 24. Letztere hat eine Mehrzahl von ähnlich den Gehängen 12 einseitig offenen Aufnahmekammern 25 für die Teiglinge 8. Die Aufnahmekammern 25 sind an einer weiteren Endlos-Förderkette 26 angebracht, die um zwei horizontal zueinander beabstandete Umlenkrollen bzw. -räder 27 läuft. Ein oberes Fördertrum der Förderkette 26 gibt eine dem stationären Übergabeförderer 23 nachgeordnete Veredelungs-Transportstrecke für die Teiglinge 8 vor. Längs dieser Veredelungs-Transportstrecke werden die Teiglinge 8 veredelt. Hierzu gehört das Stanzen bzw. Stüpfeln der Teiglinge 8 mit einer in ihrer konstruktiven Ausgestaltung bekannten Stanz/Stüpfeleinrichtung 28. Ein Stempel 29 der Stanz/Stüpfeleinrichtung 28 kann vertikal (vgl. Richtungspfeil 29a) auf- und ab synchronisiert mit der Bewegung der Aufnahmekammern 25 verlagert werden. In der Teigveredelungseinrichtung 24 kann zudem beispielsweise ein Bestreuen der Teiglinge 8 zum Beispiel mit Mehl erfolgen.

Nach Durchlaufen der Veredelungs-Transportstrecke werden die Teiglinge 8 aus den sich um die in der Zeichnung linke Umlenkrolle 27 wendenden Aufnahmekammern 25 in die dort vorbeilaufenden Gehänge 12 der Gehänge-Transporteinrichtung 10 übergeben.

Der Teigveredelungseinrichtung 24 ist im Transportweg der Teiglinge 8 nachgeordnet eine Veredelungsfolge-Transport-Weicheneinrichtung 30. Diese und die integrierte Gehänge-Wendeeinrichtung 31 sind ähnlich der Gehänge-Wendeeinrichtung 21 der Gärfolge-Transport-Weicheneinrichtung 20. Die Veredelungsfolge-Transport-Weicheneinrichtung 30 hat einen Übergabeförderer in Form eines weiteren Förderbandes 32. Die Veredelungsfolge-Transport-Weicheneinrichtung 30 ist in den Fig. 1 bis 3 in einer Abführstellung dargestellt. In dieser ist die Gehänge-Wendeeinrichtung 31 zum Wenden der an dieser vorbeilaufenden Gehänge 12 aktiv. Kurz nach der Übernahme der veredelten Teiglinge 8 aus den Aufnahmekammern 25 der Teigveredelungseinrichtung 24 in die Gehänge 12 werden die Teiglinge 8 aus den Gehängen 12 somit auf das Förderband 32 der Veredelungsfolge-Transport-Weicheneinrichtung 30 übergeben und werden vom Förderband 32 hin zu einem unter der Veredelungsfolge-Transport-Weicheneinrichtung 30 angeordneten Abführband 33 transportiert. Über das Abführband 33 werden die veredelten Teiglinge 8 hin zu einer Ausgabeeinheit 34 transportiert, wo die bearbeiteten Teiglinge 8 dann manuell oder maschinell entnommen werden können. Das Abführband 33 und die Ausgabeeinheit 34 stellen eine Ausgabe-Transporteinrichtung der Teigbearbeitungsanlage 1 dar.

Die Förderkette 14 der Gehänge-Transporteinrichtung 10 wird über einen Motor mit Antriebswelle 35 (vgl. Fig. 1) angetrieben.

Das Gärklima im Gärraum 17 wird über eine Sensoreinheit 36 überwacht und kann über eine Steuereinheit 37 beeinflusst werden. Eine weitere Steuereinheit 38 dient zur Steuerung des Förderkettenantriebs 35. Diese weitere Steuereinheit 38, die die Funktion einer Anlagensteuerung hat, kann insbesondere den Förderkettenantrieb 35 im Zeitintervall variabel einstellen. Damit kann insbesondere die Gärzeit der Teiglinge im Gärraum 17 in einem Zeitbereich zwischen einer minimalen und einer maximalen Gärzeit gesteuert vorgegeben werden.

In der Anordnung nach Fig. 1, bei der die Gärfolge-Transport-Weicheneinrichtung 20 in der Veredelungsstellung und die Veredelungsfolge-Transport-Weicheneinrichtung 30 in der Abführstellung vorliegt, erfolgt ausschließlich ein Vorgären der Teiglinge 8 vor dem Veredeln. Die Gär-Transportstrecke zwischen der Teigteil- und -portioniereinrichtung 6 und der Teigveredelungseinrichtung 24 durch den Gärraum 17 stellt dann eine Vorgär-Transportstrecke dar.

In der Abführstellung bewirkt die Veredelungsfolge-Transport-Weicheneinrichtung 30 also eine direkte Übergabe der Teiglinge 8 zwischen der Teigveredelungseinrichtung 24 und der Ausgabe-Transporteinrichtung. Eine Nachgär-Transportstrecke ist in der genannten Anordnung nicht aktiviert.

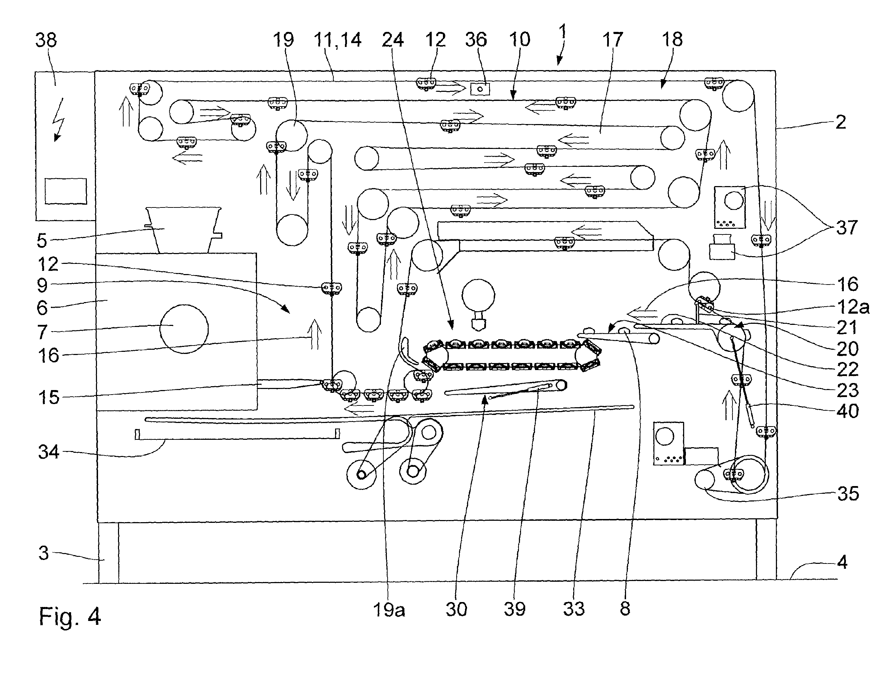

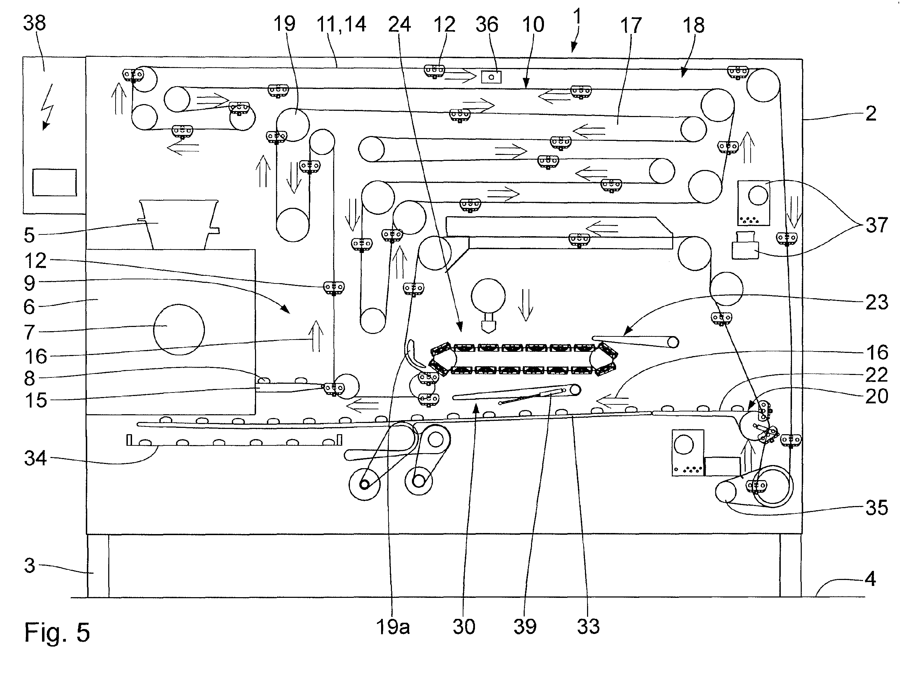

Die Veredelungsfolge-Transport-Weicheneinrichtung 30 ist verlagerbar zwischen der Abführstellung und einer in den Fig. 4 und 5 dargestellten Nachgärstellung. In dieser ist die Veredelungsfolge-Transport-Weicheneinrichtung 30 gegenüber der Abführstellung in der Fig. 4 nach rechts verlagert. Diese Verlagerung kann bewirkt werden durch einen in der Fig. 1 schematisch dargestellten Hubzylinder 39. Ein Ende des Hubzylinders 39 ist gehäusefest gelagert und das andere fest zur Veredelungsfolge-Transport-Weicheneinrichtung 30. Der Hubzylinder 39 kann über eine der Steuereinrichtungen 37, 38 oder über eine nicht näher dargestellte zentrale Steuereinrichtung der Teigbearbeitungsanlage 1 angesteuert werden.

In der Nachgärstellung der Veredelungsfolge-Transport-Weicheneinrichtung 30 beeinflusst diese den Transport der veredelten Teiglinge 8 direkt nach der Teigveredelungseinrichtung 24 nicht. Die Gehänge-Wendeeinrichtung 31 und auch das Förderband 32 sind also inaktiv, so dass die Teiglinge 8 nach der Übergabe von den Aufnahmekammern 25 in die Gehänge 12 in letzteren zunächst verbleiben. Die Gehänge 12 laufen in der Stellung nach Fig. 4 an der inaktiven Veredelungsfolge-Transport-Weicheneinrichtung 30 vorbei und laufen ein weiteres Mal an dem dann ebenfalls inaktiven, also nicht transportierenden Zuführband 15 vorbei. Anschließend durchlaufen die veredelten Teiglinge 8 die Gär-Transportstrecke nach dem Zuführband 15 ein weiteres Mal. Diese ein zweites Mal durchlaufende Gär-Transportstrecke stellt dann die Nachgär-Transportstrecke dar. Die Vorgär-Transportstrecke zwischen der Teigteil-und -portioniereinrichtung 6 und der Teigveredelungseinrichtung 24 und die Nachgär-Transportstrecke fallen längs des Gärweges durch den Gärraum 17, also längs der gemeinsamen Gär-Transportstrecke zusammen und nutzen dieselben Komponenten der Gehänge-Transporteinrichtung 10. Die Vorgär-Transportstrecke und die Nachgär-Transportstrecke sind sequentiell derart angeordnet, dass die Teiglinge 8 zunächst die Vorgär-Transportstrecke und anschließend die mittels der Veredelungsfolge-Transport-Weicheneinrichtung 30 aktivierte Nachgär-Transportstrecke durchlaufen. Die Vorgär-Transportstrecke und die Nachgär-Transportstrecke sind durch die Teigveredelungseinrichtung 24 von einander getrennt.

Fig. 5 zeigt die Gärfolge-Transport-Weicheneinrichtung 20 in einer Abführstellung. In dieser ist die Gärfolge-Transport-Weicheneinrichtung 20 in der Fig. 5 relativ zur Veredelungsstellung längs des Verlaufes der Förderkette 14 nach unten, also stromabwärts längs des Transportweges, verlagert. Auch der Übergabeförderer 22 ist daher ein verlagerbarer Übergabeförderer. Zur Verlagerung dient wiederum ein Hubzylinder 40, der in der Fig. 1 schematisch angedeutet ist. Das eine Ende des Hubzylinders 40 ist wiederum gehäusefest und das andere Ende fest zur Gärfolge-Transport-Weicheneinrichtung 20 angeordnet. Der Hubzylinder 40 kann wiederum von einer der Steuereinrichtungen 37, 38 oder von der zentralen Steuereinrichtung angesteuert werden.

Die Hubzylinder 39, 40 stellen eine Verstelleinrichtung zur Umstellung der Weicheneinrichtungen 20, 30 dar.

In der Abführstellung nach Fig. 5 ist die Gehänge-Wendeeinrichtung 21 der Gärfolge-Transport-Weicheneinrichtung 20 ebenfalls aktiv und bewirkt eine Übergabe der Teiglinge 8 nach der Gär-Transportstrecke zunächst auf den Übergabeförderer 22 und dann auf das dem Übergabeförderer 22 in der Abführstellung der Gärfolge-Transport-Weicheneinrichtung 20 direkt nachgeordnete Abführband 33. In der Abführstellung bewirkt die Gärfolge-Transport-Weicheneinrichtung 20 daher eine Übergabe der Teiglinge 8 zwischen der Gär-Transportstrecke und der Ausgabe-Transporteinrichtung.

Die Teigbearbeitungsanlage 1 kann also in verschiedenen Betriebsmodi arbeiten, die über die zentrale Steuereinrichtung vorgegeben werden können. Ein erster Betriebsmodus ist "Gären/Veredeln/Abführen". In diesem Betriebsmodus ist die Gärfolge-Transport-Weicheneinrichtung 20 in der Veredelungsstellung und die Veredelungsfolge-Transport-Weicheneinrichtung 30 ist in der Abführstellung. In diesem Betriebsmodus kann die Teigbearbeitungsanlage 1 kontinuierlich betrieben werden. Ein weiterer Betriebsmodus ist das "Vorgären/Veredeln/Nachgären/Abführen". Hier ist die Gärfolge-Transport-Weicheneinrichtung 20 zunächst in der Veredelungsstellung zur Übergabe der Teiglinge 8 von der Vorgär-Transportstrecke hin zur Teigveredelungseinrichtung 24 und anschließend in der Abführstellung zur Übergabe der Teiglinge 8 von der Nachgär-Transportstrecke hin zur Ausgabe-Transporteinrichtung. Die Veredelungsfolge-Transport-Weicheneinrichtung 30 ist in diesem Betriebsmodus ständig in der Nachgärstellung. In diesem Betriebsmodus wird die Teigbearbeitungsanlage 1 diskontinuierlich betrieben, wobei zunächst Teiglinge 8 aus der Teigteil- und -portioniereinrichtung 6 den Gehängen 12 zugeführt werden, bis ein Satz der Gehänge 12 gefüllt ist. Anschließend werden die Teigteil- und -portioniereinrichtung 6 und das Zuführband 15 gestoppt, bis der befüllte Gehängesatz die Nachgär-Transportstrecke durchlaufen hat.

Auch ein dritter Betriebsmodus ist denkbar, bei dem die Teigveredelungseinrichtung 24 inaktiv bleibt und die Gärfolge-Transport-Weicheneinrichtung 20 von Anfang an in der Abführstellung vorliegt, so dass die Teiglinge 8 einmal die Gär-Transportstrecke durch den Gärraum 17 durchlaufen. Auch in diesem dritten, reinen Gär-Betriebsmodus kann die Teigbearbeitungsanlage 1 kontinuierlich betrieben werden.

## Patentansprüche

1. Teigbearbeitungsanlage (1)
- mit einer Teigportioniereinrichtung (6);
- mit einer der Teigportioniereinrichtung (6) nachgeordneten Transportvorrichtung (9) für Teiglinge (8);
- mit einer Gärvorrichtung (18) mit einem Gärraum (17), durch den die Teiglinge (8) längs eines Gärweges mit der Transportvorrichtung (9) transportiert werden;
- mit einer Vorgär-Transportstrecke zwischen der Teigportioniereinrichtung (6) und einer Teigveredelungseinrichtung (24);
- mit einer Ausgabe-Transporteinrichtung (33, 34) zur Ausgabe gegärter Teiglinge (8);
- mit einer Nachgär-Transportstrecke zwischen der Teigveredelungseinrichtung (24) und der Ausgabe-Transporteinrichtung (33, 34),
- wobei die Vorgär-Transportstrecke und die Nachgär-Transportstrecke zumindest abschnittsweise zusammenfallen, also längs einer gemeinsamen Gär-Transportstrecke verlaufen und die gleichen Komponenten der Transportvorrichtung (9) nutzen.

2. Teigbearbeitungsanlage nach Anspruch 1, **dadurch gekennzeichnet, dass** die Transportvorrichtung (9) eine Mehrzahl von längs eines Endlos-Weges (11) transportierten Gehängen (12) für die Teiglinge (8) aufweist.

3. Teigbearbeitungsanlage nach Anspruch 1 oder 2, **gekennzeichnet durch** eine der Teigveredelungseinrichtung (24) nachgeordnete Veredelungsfolge-Transport-Weicheneinrichtung (30), die umstellbar ist zwischen
- einer Abführstellung, in der die Veredelungsfolge-Transport-Weicheneinrichtung (30) eine Übergabe der Teiglinge (8) zwischen der Teigveredelungseinrichtung (24) und der Ausgabe-Transporteinrichtung (33, 34) bewerkstelligt, und
- einer Nachgärstellung, in der die Veredelungsfolge-Transport-Weicheneinrichtung (30) eine Übergabe der Teiglinge (8) zwischen der Teigveredelungseinrichtung (24) und der Nachgär-Transportstrecke bewerkstelligt.

4. Teigbearbeitungsanlage nach einem der Ansprüche 1 bis 3, **gekennzeichnet durch** eine der gemeinsamen Gär-Transportstrecke nachgeordnete Gärfolge-Transport-Weicheneinrichtung (20) , die umstellbar ist zwischen
- einer Veredelungsstellung, in der die Gärfolge-Transport-Weicheneinrichtung (20) eine Übergabe der Teiglinge (8) zwischen der Gär-Transportstrecke und der Teigveredelungseinrichtung (24) bewerkstelligt, und
- einer Abführstellung, in der die Gärfolge-Transport-Weicheneinrichtung (20) eine Übergabe der Teiglinge (8) zwischen der Gär-Transportstrecke und der Ausgabe-Transporteinrichtung (33, 34) bewerkstelligt.

5. Teigbearbeitungseinrichtung nach Anspruch 3 oder 4, **dadurch gekennzeichnet, dass** die Transport-Weicheneinrichtung (20; 30) einen verlagerbaren Übergabeförderer (22; 32) aufweist.

6. Teigbearbeitungseinrichtung nach einem der Ansprüche 3 bis 5, **dadurch gekennzeichnet, dass** die Transport-Weicheneinrichtung (20; 30) eine Gehänge-Wendeeinrichtung (21; 31) aufweist.

7. Teigbearbeitungsanlage nach Anspruch 6, **dadurch gekennzeichnet, dass** die Gehänge-Wendeeinrichtung (21; 31) einen integralen Bestandteil des verlagerbaren Übergabeförderers (22; 32) bildet.

8. Teigbearbeitungsanlage nach einem der Ansprüche 4 bis 7, **dadurch gekennzeichnet, dass** die Gärfolge-Transport-Weicheneinrichtung (20) neben dem verlagerbaren Übergabeförderer (22) einen weiteren stationären Übergabeförderer (23) aufweist.

9. Teigbearbeitungsanlage nach einem der Ansprüche 1 bis 8, **dadurch gekennzeichnet, dass** die Teigportioniereinrichtung (6), die Gärvorrichtung (18) und die Teigveredelungseinrichtung (24) in ein und demselben Gehäuse (2) untergebracht sind.

10. Teigbearbeitungsanlage nach einem der Ansprüche 3 bis 9, **gekennzeichnet durch** eine steuerbare Verlagerungseinrichtung (39, 40) zur Umstellung der Veredelungsfolge-Transport-Weicheneinrichtung (30) und/oder der Gärfolge-Transport-Weicheneinrichtung (20).
